# EUROPÄISCHE PATENTANMELDUNG

(11) **EP 1 596 031 A2**
(43) Veröffentlichungstag der Anmeldung: **16.11.2005**
(21) Anmeldenummer: 04028270.9
(22) Anmeldetag: 29.11.2004
(51) Int. Cl.: E06B 7/23

(54) **Elastische Strangdichtung für Fenster, Türen oder dgl.**

(30) Priorität: 14.05.2004 DE 102004024127
(71) Anmelder: DEVENTER PROFILE GmbH & Co. KG, D-13587 Berlin (DE)
(72) Erfinder: Förster, Arthur, 14193 Berlin (DE)
(74) Vertreter: Geyer, Werner

(57) **Zusammenfassung**

Bei einer elastischen Strangdichtung (1) mit einem als Hohlquerschnitt (30) ausgebildeten Kopfbereich (2) und einem mit diesen über einen Profilrücken (4) verbundenen Fußbereich (3) weist der Kopfbereich (2) dem Profilrücken (4) gegenüber einen Dichtsteg (6) und einen in diesen einmündenden Stützsteg (7) auf, wobei letzterer über einen Quersteg (9) mit dem Profilrücken (4) verbunden ist. Der Dichtstege (6) ist oben über einen mit einer V-förmigen Einbuchtung (10) auf seiner Oberseite versehenen Verbindungssteg (9) mit dem oberen Ende des Profilrückens (4) verbunden. Der Verbindungssteg (4) weist an seinem vom Scheitelpunkt (S) der Einbuchtung (10) bis zum Profilrücken (4) verlaufenden Abschnitt eine zunehmend dickere Wandstärke auf. Der Stützsteg (7) läuft vom Quersteg (9) unter einem Winkel etwas größer oder etwas kleiner als 90° ab und mündet an der Unterseite des Dichtsteges (6) über einen Abschnitt (B) in diesen ein, der mindestens 40% der Länge (L) des Dichtstegs (6) umfaßt.

## Beschreibung

Die Erfindung bezieht sich auf eine elastische Strangdichtung für Fenster, Türen oder dgl. mit einem als Hohlquerschnitt ausgebildeten Kopfbereich und einem Fußbereich, der mit mindestens einer Halterippe zur Verankerung in einer Haltenut eines Flügelfalzes eines Fensters, einer Türe oder dgl. versehen ist, wobei Kopfbereich und Fußbereich über einen Profilrücken miteinander verbunden sind und der Kopfbereich auf seiner dem Profilrücken gegenüberliegenden Seite einen Außensteg aufweist, der aus einem Dichtsteg und einem in diesen einmündenden Stützsteg beseht, wobei ferner, von der Innenseite des Hohlquerschnitts aus gesehen, Dichtsteg und Stützsteg unter einem stumpfen Winkel zueinander angestellt sind, der Dichtsteg an seinem vom Stützsteg abgewandten Ende mit dem einen Ende des Profilrückens über einen Verbindungssteg verbunden ist, der auf seiner dem Hohlquerschnitt abgewandten Außenseite eine V-förmige Einbuchtung hat, deren Seiten unter einem stumpfen Winkel zueinander geneigt sind, und wobei der Stützsteg an seinem dem Dichtsteg abgewandten Ende in einen Quersteg mündet, der im wesentlichen senkrecht zum Profilrücken verläuft.

Bei solchen sogenannten "Anschlagdichtungen" treten im eingebauten Zustand bei Reibeingriff insbesondere dann Probleme auf, wenn es sich um eine Anwendung bei stumpf eindrehenden Fenstern, Türen oder dgl. handelt, bei denen also der Blend- und der Flügelrahmen raumseitig mit ihren Oberflächen angenähert in einer Ebene liegen und der Flügelrahmen über den Falz nicht als Innenüberschlag vorsteht.

Bei einem stumpf eindrehenden Fenster mit seiner "ungünstigen" Drehpunktlage für den Flügelrahmen schwenkt der Flügelrahmen gegenüber dem Blendrahmen beim Schließen des Flügels im letzten Abschnitt der Schließbewegung so ein, daß bei Dichtanlage gegen den Dichtungskopf dieser nicht nur in Richtung auf den Dichtrücken hin verformt wird, sondern auch der sich gegen die Dichtung anlegende Bereich des Flügelrahmens angenähert parallel zur Ausrichtung des Profilrückens relativ zum Dichtsteg bewegt wird und damit am Dichtsteg eine starke, in Richtung dessen Längserstreckung wirksame Reibkraftkomponente auftritt, die dazu führen kann, daß sich der Kopfbereich der Dichtung "*überkrempelt",* d. h. nicht nur in Richtung zum Dichtrücken hin, sondern auch parallel zu diesem verquetscht wird.

Eine elastische Strangdichtung der eingangs genannten Art ist z. B. aus der DE 197 14 465 C1 bekannt. Wenngleich sich diese bekannte Strangdichtung hervorragend in ihrer Anwendung bei überfälzten Flügelrahmen bewährt hat, trat bei einem Einsatz für stumpf eindrehende Fenster oder Türen bisweilen die Gefahr eines unerwünschten Überkrempelns des Dichtungskopfes auf.

Ausgehend hiervor liegt der Erfindung die Aufgabe zugrunde, eine solche gattunsgemäße Anschlagdichtung so weiter zu entwickeln, daß auch bei stumpf eindrehenden Fenstern, Türen oder dgl. bei ihrer Verwendung ein unerwünschtes Überkrempeln des Dichtungskopfes deutlich besser verhindert wird.

Erfindungsgemäß wird dies bei einer Strangdichtung der eingangs genannten Art dadurch erreicht, daß der Verbindungssteg auf seiner dem Holquerschnitt zugewandten Innenseite - im Querschnitt der Dichtung gesehen -so ausgebildet ist, daß der Bereich des Quersteges, der vom Scheitel der V-förmigen Einbuchtung aus zum Profilrücken hin verläuft, mit wachsendem Abstand vom Scheitel S bis hin zur Einmündung in den Profilrücken zunehmend dicker wird, und daß der Stützsteg zwischen Quersteg und Dichtsteg als ein im wesentlichen geradlinig verlaufender Steg ohne eine an ihm dazwischen angebrachte Gelenkstelle ausgebildet ist, der auf seiner dem Hohlquerschnitt zugewandten Innenseite vom Quersteg unter einem Winkel abläuft, dessen Größe im entspannten Zustand der Dichtung, in einem Bereich von 80° bis 100° liegt, und der auf der Unterseite des Dichtsteges in diesen - vom Hohlquerschnitt aus gesehen - über einen Bereich der Länge des Dichtsteges hinweg einmündet, der mindestens 40% der Gesamtlänge des Dichtsteges beträgt. Besonders bevorzugt entspricht dieser Bereich etwa der halben Länge des Dichtsteges.

Bei der erfindungsgemäßen Strangdichtung ist im Kopfbereich nunmehr der Verbindungssteg über seinen Bereich hinweg, der zwischen seiner Einmündestelle in den Profilrücken und dem Scheitelpunkt der V-förmigen Einbuchtung liegt, mit einer zum Profilrücken hin immer größer werdenden Materialverdickung versehen, die einen erheblichen Widerstand gegen ein Verbiegen des Quersteges unter Einwirkung der am Dichtsteg auftretenden tangentialen Reibkräfte in einer Richtung angenähert parallel zum Profilrücken (also in Richtung zum Inneren des Hohlquerschnitts hin), wie sie zu einem unerwünschten Überkrempeln führen kann, ergibt. Dieser Effekt wird verstärkt durch die weiteren Maßnahmen bei der erfindungsgemäßen Strangdichtung, nämlich die Ausbildung des Stützsteges als im wesentlichen geradlinig verlaufender Steg ohne eine in seinem Verlauf angeordnete Zwischen-Gelenkstelle sowie seine vom Quersteg fast senkrecht (oder nur geringfügig zur Senkrechten geneigt) verlaufende Erstreckung und seine Einmündung sowohl auf der Unterseite des Dichtsteges, als auch über einen Bereich von mindestens 40% der Gesamtlänge des Dichtsteges hinweg. Auch diese Maßnahmen sorgen für einen sehr starken Widerstand dagegen, daß bei Dichteingriff der Dichtsteg nach unten hin, also in Richtung zum Profilfuß hin, etwa parallel zum Profilrücken verschoben werden könnte, was einem unerwünschten Überkrempeln des Dichtungskopfes entspräche.

Durch die erfindungsgemäße Ausbildung der Strangdichtung wird also eine Anschlagdichtung mit einem Dichtungskopf geschaffen, der in sehr guter Weise einem Überkrempeln bei Dichteingriff zu widerstehen vermag, so daß sich diese Anschlagdichtung ganz besonders auch für den Einsatz bei stumpf eindrehenden Fenstern, Türen oder dgl. eignet.

Vorzugsweise wird der Dichtsteg auf seiner dem Hohlquerschnitt abgewandten Außenseite mit einer Verschleißauflage versehen, die vorteilhafterweise (im Hinblick auf das sich bei Dichteingriff gegen sie anlegende Material des Flügels) auch günstigere Reibeigenschaften als das Material des Dichtsteges hat. Dadurch läßt sich insgesamt die Lebensdauer der erfindungsgemäßen Strangdichtung im eingebauten Zustand erhöhen.

Es ist ferner vorteilhaft, wenn der Fußbereich der Dichtung auf der dem Hohlquerschnitt abgewandten Seite des Profilrückens von diesem vorspringt, bevorzugt unter einem Winkel von etwa 90°, was einer besonderen Einbauart entspricht. Vorteilhafterweise wird dabei der Kopfbereich auf seiner dem Hohlquerschnitt abgewandten Außenseite, soweit er nicht durch den Dichtrücken gebildet wird, vollständig (also nicht nur im Bereich des Dichtsteges) mit einer Überzugsschicht aus einem gegenüber dem Material der Strangdichtung härteren elastischen Material versehen, das bevorzugt auch die genannten günstigeren Reibeigenschaften hat.

Der Dichtsteg selbst kann jede für seine Funktion geeignete Form aufweisen, wobei insbesondere ein geradliniger Verlauf möglich ist. Ganz besonders bevorzugt wird der Dichtsteg jedoch auf seiner Außenseite mit einer (im Querschnitt gesehen) nach außen hin gewölbten Formgebung versehen, die bei zunehmend stärker werdendem Eingriff mit dem Flügelrahmen (beim Schließen des Flügels) besonders günstig ist.

Eine besonders bevorzugte Ausgestaltung des Stützsteges besteht auch darin, daß er über seine ganze Länge hinweg bis zur Einmündestelle in die Unterseite des Dichtsteges eine etwa gleich große Dicke aufweist.

In einer anderen Ausgestaltung der erfindungsgemäßen Strangdichtung sind der Kopfbereich und der Fußbereich der Dichtung gemeinsam auf derselben Seite des Profilrückens angeordnet, was einer weit verbreiteten Einbauvorgabe entspricht. Bevorzugt wird dabei in dem Eckbereich der Dichtung, in dem der Verbindungssteg in das zugeordnete Ende des Dichtrückens einläuft, am Ende des Dichtrückens eine sogenannte Dehnsperre in diesem ausgebildet, d. h. eine strangförmige Einlagerung aus einem Material, das in Stranglängsrichtung gesehen erheblich weniger elastisch als der Grundwerkstoff der Dichtung ist. Dadurch kann ein automatisches Einführen der Dichtung in die Aufnahmenut des zugehörigen Rahmens in einer zu Ausrichtung des Profilrückens parallelen Einschieberichtung besonders gut und effektiv durchgeführt werden.

Ebenfalls vorzugsweise wird der Quersteg in dem Bereich, der zwischen der Einmündestelle des Stützstegs und dem Profilrücken verläuft, mit einer zum Profilrücken hin zunehmenden Dicke versehen, die besonders bevorzugt so ausgebildet sein kann, daß sie bei vollständigem Dichteingriff, also bei geschlossenem Fenster oder geschlossener Türe, auf der Rückseite des Stützsteges einen Anschlag gegen ein weiteres Einrücken desselben in Richtung auf den Profilrücken hin ausbildet.

Vorteilhafterweise wird bei einem solchermaßen mit zunehmender Dicke ausgeführten Quersteg die dem Fußbereich der Dichtung zugewandten Außenseite des Quersteges - im Querschnitt - im wesentlichen geradlinig verlaufend und unter etwa 90° in den Profilrücken einlaufend ausgebildet, während seine dem Hohlquerschnitt zugewandte Innenseite von der Einmündestelle des Stützstegs in den Quersteg aus schräg zum Dichtrücken hin unter einem (von der Innenseite des Hohlquerschnitts aus gesehen) stumpfen Winkel zu letzterem oder mit einem bogenförmigen Verlauf versehen.

Eine ebenfalls bevorzugte Ausgestaltung der erfindungsgemäßen elastischen Strangdichtung besteht auch darin, daß der Dichtsteg an der Außenseite seines dem Stützsteg zugewandten Endes im Querschnitt abgerundet ist und dort unter Ausbildung einer kleinen Einkerbung in die Außenseite des Stützsteges einläuft, wobei die Einkerbung im Querschnitt bevorzugt kreisförmig ausgebildet ist und hier auf der Außenseite des Stützstegs an seiner Einlaufstelle in den Dichtsteg eine kleine Gelenkstelle bildet.

Bei einer anderen vorzugsweisen Ausgestaltung der Erfindung mündet der Quersteg in zwei unter einem stumpfen Winkel auseinanderlaufende Schrägstege ein, die sein Ende mit dem Profilrücken verbinden, wobei einer dieser Schrägstege zu dem Endbereich des Profilrückens hin verläuft, an dem der Dichtungsfuß ausgebildet wird, während der andere Schrägsteg in dem Profilrücken in einem Abstand zur Einmündestelle des Profilsteges in diesen einläuft. Hierdurch ergibt sich eine besonders widerstandsfähige Ausgestaltung des Übergangs zwischen dem Kopfbereich und dem Dichtungsfuß, wobei in dieser Ausgestaltung die Dichtung ebenfalls besonders gut automatisch in die Aufnahmenut in Längsrichtung des Profilrückens eingeschoben werden kann, da der Fußbereich sehr steif ausgebildet ist.

Die Erfindung wird nachfolgend anhand der Zeichnung im Prinzip beispielshalber noch näher erläutert. Es zeigen:
- Fig. 1: einen Querschnitt durch eine Ausführungsform einer erfindungsgemäßen Strangdichtung;
- Fig. 2, 3, 4 und 5: drei weitere zu der in Fig. 1 dargestellten Ausführungsform der Erfindung alternative Ausführungsformen;
- Fig. 6 bis 10: die in Fig. 4 dargestellte Strangdichtung im eingebauten Zustand bei verschiedenen Stadien eines Dichteingriffes, sowie
- Fig. 11, 12 und 13: Querschnitte dreier weitere Ausführungsformen einer erfindungsgemäßen Strangdichtung.

In den folgenden Figurendarstellungen sind auch bei der Illustration unterschiedlicher Ausführungsformen einer elastischen Strangdichtung stets gleiche Teile mit gleichen Bezugszeichen versehen. In der Figurenbeschreibung bezeichnen Angaben wie "*oben, oberer..."* eine Lage in Richtung zum oberen, am Dichtungskopf liegenden Ende der Dichtung, während Ausdrücke wie "*unten, unterer..."* eine Lage in Richtung zum Dichtungsfuß hin angeben sollen.

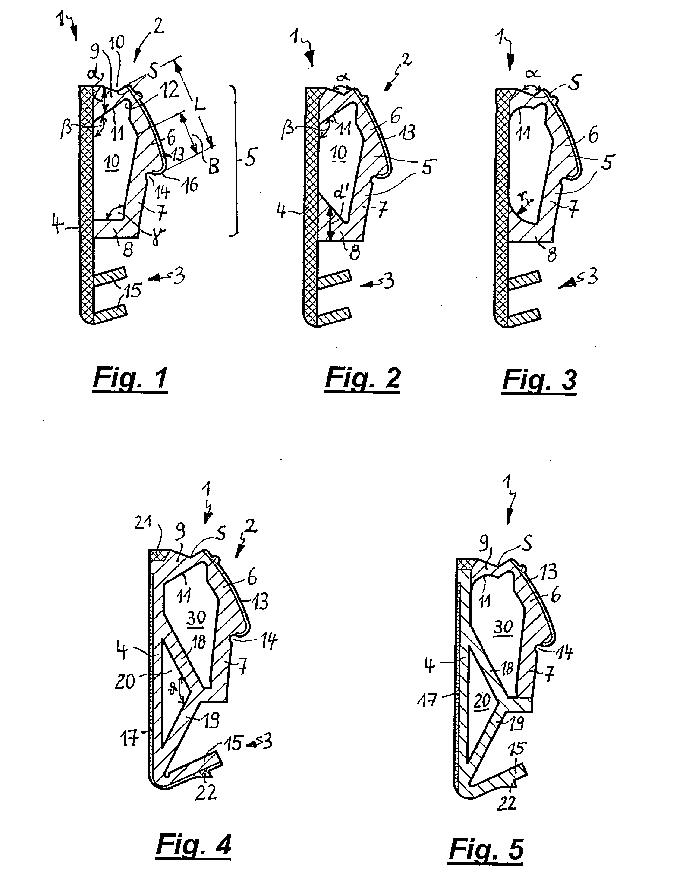

Bei dem in Fig. 1 dargestellten (sehr stark vergrößerten) Querschnitt einer elastischen Strangdichtung 1 weist diese einen Kopfbereich 2 sowie einen sich unterhalb desselben direkt anschließenden Fußbereich 3 auf, wobei Kopfbereich 2 und Fußbereich 3 über einen gemeinsamen Profilrücken 4 miteinander verbunden sind.

Dabei wird der Kopfbereich 2 auf seiner dem Profilrücken 4 gegenüberliegenden Seite von einem Außensteg 5 gebildet, der in seinem oberen Abschnitt einen Dichtsteg 6 und in seinem unteren Abschnitt einen Stützsteg 7 umfaßt. Der Stützsteg 7 läuft an seinem unteren Ende in einen Quersteg 8 ein, der im wesentlichen senkrecht zum Profilrücken 4 verläuft und in diesen mündet.

Der Dichtsteg 6 des Außensteges 5 ist an seinem oberen Ende über einen Verbindungssteg 9 mit dem oberen Ende des Profilrückens 4 verbunden, wobei dieser Verbindungssteg 9 auf seiner Oberseite im Bereich zwischen seiner Einmündestelle in den Profilrücken 4 und dem Dichtsteg 6 eine V-förmige Einkerbung 10 aufweist, deren Seitenflanken unter einem stumpfen Winkel α zueinander liegen (vgl. Fig. 2 und 3).

Der aus einem Abschnitt des Profilrückens 4, dem Außensteg 5 (mit dem Dichtsteg 6 und dem Stützsteg 7), dem Quersteg 8 und dem Verbindungssteg 9 bestehende Kopfbereich 2 bildet einen geschlossenen Hohlquerschnitt 30 aus.

In der Querschnittdarstellung der Fig. 1 ist die dem Hohlquerschnitt 30 zugewandte Innenseite des Verbindungsstegs 9 über ihre ganze Länge hinweg bis zur Einmündung in den Dichtsteg 6 als eine vom Profilrücken 4 unter einem - auf der Innenseite des Hohlquerschnitts 30 gesehen - stumpfen Winkel β schräg nach oben zum oberen Endabschnitt des Dichtsteges 6 hin ansteigende, gerade Fläche 11 ausgebildet, die an ihrem dem Dichtsteg 6 zugewandten Ende über eine Abrundung 12 in die Unterseite des Dichtstegs 6 einmündet. Wie aus Fig. 1 entnommen werden kann, laufen die dem Hohlquerschnitt 30 abgewandte Oberseite und die ihm zugewandte Innenseite 11 des Verbindungsstegs 9 unter einem spitzen Winkel in Richtung zum Profilsteg 4 hin auseinander derart, daß vom Scheitelpunkt ***S*** der Einkerbung 10 aus in Richtung zum Profilrücken 4 hin die Dicke **d** des Verbindungssteges 9 kontinuierlich anwächst. In seinem bezüglich des Scheitelpunkts ***S*** der Einkerbung 10 gegenüberliegenden Abschnitt weist der Verbindungssteg 9 einen im wesentlichen konstant dicken Querschnitt auf bis zu seiner Einmündestelle in den Dichtsteg 6.

Der Stützsteg 7 ist, wie Fig. **1** gut zeigt, so angeordnet, daß er in den Dichtsteg 6 auf dessen Unterseite einmündet, und zwar unter einem solchen Winkel, daß bei der gegebenen Dicke des Stützsteges 7 sich dessen Einmündung in den Dichtsteg 6 auf dessen Unterseite über einen Längenbereich ***B*** hinweg erstreckt, der im gezeigten Ausführungsbeispiel etwa 50% der Gesamtlänge ***L*** des Dichtsteges 6 beträgt, jedoch auch etwas kleiner (bis etwa 40% von ***L***) oder auch größer sein kann. Dadurch bewirkt der Stützsteg 7, der vom Quersteg 8 unter einem Winkel γ nach oben abläuft, der nur geringfügig größer oder kleiner als 90° ist (und bevorzugt zwischen 80° und 100° liegt), infolge dieser nur geringen Anstellung zur Senkrechten und des großen Einlaufbereiches in den Stützsteg 6 auf dessen Unterseite eine sehr kompakte Stütze sowohl gegen ein Eindrücken des Dichtsteges 6 in Richtung auf den Profilrücken 4 hin (wie dies beim Schließen des Flügels einer Türe o. ä. immer eintritt), wie besonders auch noch in Richtung auf ein unerwünschtes Verschieben des Stützsteges 6 in Richtung nach unten hin unter Wirkung der längs der Oberfläche des Stützsteges 6 bei Reibeingriff auftretenden und durch die Relativbewegung des anliegenden Flügelrahmens relativ zum Stützsteg 6 in der Berührungsfläche mit dieser bewirkten Reibungskräfte und verhindert dadurch ein Überkrempeln des Kopfbereichs 2.

Wie Fig. 1 ferner zeigt, ist der Dichtsteg 6 mit einem dünnen Überzug 13 zur Verbesserung der Verschleiß- und Reibeigenschaften bei Dichteingriff versehen und verläuft, da der Dichtsteg 6 an seinem unteren Ende im Querschnitt eine vorzugsweise kreisförmige Rundung 16 aufweist, bis über diese hinweg. Die Rundung 16 geht dann über eine kleine Einsenkung 14 mit kreisabschnittförmigem Querschnitt in die Außenfläche des Stützsteges 7 über, so wie dies in Fig. 1 im einzelnen dargestellt ist, wobei auf die zeichnerische Darstellung insoweit ausdrücklich verwiesen wird. Die Einsenkung 14 bildet auf der Außenseite des Stützsteges 7 an dessen am Stützsteg 6 einmündeseitigen Ende eine kleine Gelenkstelle aus, die beim Einfedern des Außensteges 5 bei Dichteingriff in Richtung auf den Profilrücken 4 hin ein problemloses Einfedern des mit dem Überzug 13 versehenen Endbereiches des Dichtungssteges 6 relativ zum Stützsteg 7 gewährleistet.

Der Profilrücken 4 besteht aus einem gegenüber dem Material von Außensteg 5, Quersteg 8 und Verbindungssteg 10 deutlich härteren Material, wobei auch am unteren Ende des Stützsteges 4 im Fußbereich 3 angebrachte Halterippen 15, die zur Verankerung in einer Aufnahmenut eines Rahmens dienen, ebenfalls aus einem härteren Material als dem von Außensteg 5, Quersteg 8 und Verbindungssteg 10 bestehen.

Während bei der Ausführungsform der Fig. 1 der Quersteg 8 zwischen der Einmündestelle des Stützsteges 7 und dem Profilrücken 4 eine im wesentlichen konstante Dicke aufweist, ist dies bei den in den Fig. 2 und 3 dargestellten anderen Ausführungsformen dieser Dichtung anders:

Bei den Profilformen der Fig. 2 und 3 ist der Quersteg 8 so ausgebildet, daß er von der Einmündestelle des Stützsteges 7 aus in Richtung zum Profilrücken 4 hin eine laufend anwachsende Dicke **d'** aufweist, die im Fall des Profiles aus Fig. 2 sich im Querschnitt als eine im wesentlichen gerade sowie schräg nach oben zum Profilrücken 4 hin verlaufende Fläche ergibt, während bei der Profilform der Fig. 3 im Querschnitt insoweit eine zum Profilrücken 4 hin mit einer Krümmung (Krümmungsradius r) nach oben hin ansteigende Form ergibt.

Während bei der Profilform der Fig. 2 der Verbindungssteg 9 so wie bei der Profilform aus Fig. 1 ausgebildet ist, liegt bei der Ausführungsform der Fig. 3 eine andere Gestaltung vor: hier verläuft im Querschnitt die Innenfläche 11 des Verbindungssteges 9 nicht in einer kontinuierlich vom Profilrücken 4 zum Stützsteg 6 hin nach oben ansteigenden Geraden, sondern in dem Abschnitt zwischen dem Scheitelpunkt S der Vertiefung 10 und dem Profilrücken 4 in einer Kreisbogenform bzw. einer gekrümmten Form, wie sie in Fig. 3 im einzelnen dargestellt ist. Die Innenseite des Teils des Verbindungsstegs 9, der sich vom Scheitelpunkt S der Einbuchtung 10 bis zum Ende des Dichtsteges 6 erstreckt, ist hingegen in gleichbleibender Dicke ausgeführt, wie dies auch im Falle der Figuren 1 und 2 gilt.

In den Fig. 4 und 5 sind die Querschnitte zweier weiterer Ausführungsformen der Strangprofildichtung gezeigt, die sich im wesentlichen von den Dichtungsformen aus den Fig. 1 bis 3 durch eine andere Gestaltung des Abschnittes unterhalb des Kopfbereiches 2, also zum Fußbereich 3 hin, unterscheiden.

Die Profilform aus Fig. 4 besteht zunächst aus einem einheitlichen Werkstoff und nicht, wie die Profilformen aus den Fig. 1 bis 3, aus unterschiedlichen Werkstoffen für den Kopfbereich 2 und den Profilrücken 4 und die Halterippen 15. Dabei ist am unteren Ende des Profilrückens 4 nur eine nach der Gegenseite und schräg nach oben verlaufende Halterippe 15 zur Verankerung in einer geeigneten Aufnahmenut vorgesehen. Der Profilrücken ist mit einer in ihn auf seiner außenliegenden Seite eingelassenen dünnen Verstärkungseinlage 17 in Form einer dünnen Randschicht versehen, die aus einem härteren Material als der übrige Dichtungskörper besteht und daher beim Einschieben der Dichtung (in einer Richtung parallel zu der Ausrichtung des Profilrückens 4) in eine Aufnahmenut hinein ein unerwünschtes elastisches Zusammendrücken der Dichtung verhindert, wobei die Verstärkungseinlage 17 nicht nur aus härterem, sondern auch aus einem Material besteht, das beim Einschieben günstige Reibeigenschaften aufweist, damit die Einschiebekräft nicht zu groß werden.

Die Verstärkungseinlage 17 ist am unteren Ende des Profilrückens 4 um diesen herumgeführt und liegt auch auf der Unterseite des Haltefußes 15 vor, wobei sie dort, wie Fig. 4 zeigt, einen zackenförmigen Vorsprung 22 ausbildet, der so geformt ist, daß er beim Einschieben in die Aufnahmenut keinen merklichen Zusatzwiderstand ergibt, dann aber beim Sitz in der Aufnahmenut, wenn die Halterippe 15 in Richtung zum Profilrücken 4 hin elastisch umgebogen ist, durch seine Formgebung einem Herausrutschen des Profilfußes 3 aus der Aufnahmenut entgegenwirkt.

Bei den Profilformen aus den Fig. 4 und 5 verläuft der Quersteg von der Einmündestelle des Stützsteges 7 aus in Richtung zum Profilrücken 4 hin nur über eine kurze Strecke und mündet nicht in den Profilrücken 4 ein, sondern in zwei unter einem stumpfen Winkel ϑ von ihm auseinanderlaufende Schrägstege 18 und 19. Der obere der beiden Schrägstege (Schrägsteg 18) verläuft schräg nach oben (in geradliniger Form, wie Fig. 4 und 5 zeigen) bis zur Einmündung in den Profilrücken 4 an einer Stelle, die deutlich unterhalb der Einmündestelle des Verbindungssteges 9 in dem Profilrücken 4 liegt.

Der andere Schrägsteg 19 läuft schräg zum unteren Endbereich des Profilrückens 4 hin, also schräg nach unten zum Profilfuß 3, und mündet in den unteren Endbereich des Profilrückens 4 ein, wie dies die Fig. 4 und 5 zeigen.

Der Winkel ϑ ist bevorzugt so gewählt, daß die Schrägstege 18 und 19 zusammen mit dem Profilrücken 4 ein gleichschenkliges Dreieck bilden (d. h. die Schrägstege 18 und 19 sind etwa gleich lang, was aber nicht zwingend ist) und umschließen damit einen weiteren Hohlquerschnitt 20.

Damit ergibt sich eine besonders starke Versteifung der Abstützung des Quersteges 8 gegenüber dem Profilrücken 4 und gleichzeitig auch eine sehr steife Ausbildung des Fußbereiches 3, die beim Einschieben desselben in eine Aufnahmenut und auch im Hinblick auf dessen sicheren Sitz dort Vorteile ergibt.

Bei der Ausführungsform der Fig. 5 liegt, im Gegensatz zu der aus Fig. 4, der Unterschied vor, daß dort zum einen die dem Hohlquerschnitt 30 zugewandte Innenseite des Verbindungssteges 9 eine Ausbildung wie bei der in Fig. 3 gezeigten Ausführungsform aufweist, während die Profilform nach Fig. 4 insoweit eine im Querschnitt geradlinig schräg nach oben verlaufende Innenfläche 11 hat, wie dies auch bei der Ausführungsform nach Fig. 1 der Fall ist.

Bei den Ausführungsformen der Fig. 4 und 5 ist zudem am oberen Ende des Profilrückens 4 eine Dehnsperre 21 eingelassen, die aus einem elastischen Material besteht, dessen Elastizität jedoch deutlich geringer ist als die des Quersteges 11 und des Profilrückens 4 (bei den Ausführungsformen der Fig. 1 bis 3 liegt eine solche Dehnsperre nicht speziell vor, weil dort infolge des härteren Materials für den Proflrücken 4 bereits dieses denselben Effekt erzielt). Die Dehnsperre 21 dient dazu, beim automatischen Einziehen eines solchen Strangprofiles in eine Haltenut (und zwar bei dessen seitlichem Einführen und dem Durchziehen in Längsrichtung) eine zu starke elastische Dehnung (im oberen Zugbereich des Profilrückens) zu verhindern, so daß am eingezogenen Strangprofil, wenn die Einzugskraft entfällt, nicht - wie es ansonsten ohne eine solche Dehnsperre auftritt - im anfänglichen Bereich des eingezogenen Stranges (in Einzugsrichtung gesehen) eine zu starke Rückfederung eintritt, welche bewirken könnte, daß der Strang nicht von einem Nutende bis zum anderen Nutende reicht.

Bei den Ausführungsformen der Fig. 4 und 5 ist ebenfalls wie bei den Ausführungsformen der Fig. 1 bis 3 auf der Außenseite des Dichtsteges 6 ein Verschleißüberzug 13 mit günstigen Reibeigenschaften aufgebracht.

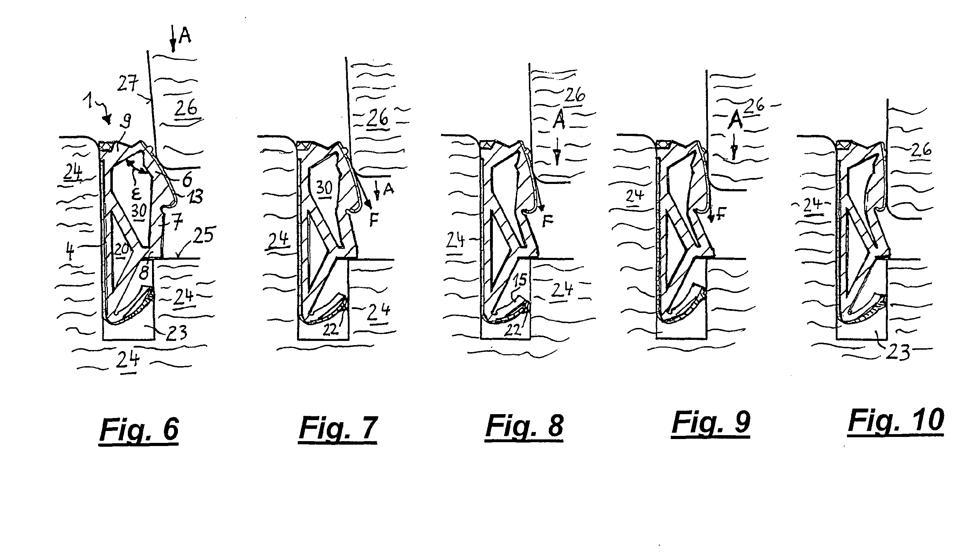

Die Ausführungsform der Fig. 5 unterscheidet sich von der der Fig. 6 neben der anderen Ausgestaltung der Innenfläche 11 des Verbindungssteges 9 auch noch dadurch, daß der Abschnitt des Kopfbereiches, der vor dem Profilrücken 4 und oberhalb des Quersteges 8 liegt, aus einem anderen Material gefertigt ist. Dieser Kopfabschnitt, der aus dem Außensteg 5 und dem oberen Quersteg 9 besteht, wird bevorzugt aus einem etwas weicherem Material als die anderen Teile der Dichtung ausgeführt.

Auch ist bei der Ausführungsform der Fig. 5 die Verstärkungseinlage 17 nur auf der Rückseite des Profilrückens 4 eingelassen und erstreckt sich nicht über dessen unteres Ende bis auf die Außenseite der Halterippe 15. Entsprechend ist an der Halterippe 15 hier der Vorsprung 22 direkt aus dem Material der Halterippe 15 gebildet.

In den Fig. 6 bis 10 ist, im Querschnitt, die Profildichtung aus Fig. 4 im eingebauten Zustand während verschiedener Stadien eines Reibeingriffs dargestellt, nämlich in Fig. 6 in dem Zustand, bei dem der zu schließende Flügel gerade zur Anlage gegen die Außenseite des Dichtsteges 6 kommt, bis hin zu dem vollständig geschlossenen Zustand des Fensters, der Türe oder dgl., wie er in Fig. 10 gezeigt ist. Die Fig. 7 bis 9 illustrieren Zwischenstellungen während des Schließvorgangs.

Fig. 6 zeigt die Strangdichtung in der Ausführungsform gemäß Fig. 4, wie sie in eine Aufnahmenut 23 in einem Rahmen 24 eingesetzt ist. Der Fußbereich ragt dabei in die Aufnahmenut 23 hinein, in welcher der Haltefuß 15 nach oben elastisch verschoben ist und der Rastvorsprung 22 auf der Unterseite bzw. der Außenseite des Haltefußes 15 sich gegen die zugewandte Seitenfläche der Aufnahmenut 23 so abstützt, daß ein Herausziehen des Dichtungsfußes 3 aus der Aufnahmenut 23 erschwert wird.

Wie ferner aus den Figuren 6 bis 10 ersichtlich, stützt sich der Quersteg 8 auf seiner Unterseite gegen die dem Profilrücken 4 abgewandte Oberseite 25 des Rahmens 24 ab.

Ein Flügelrahmen 26 ist bei der Darstellung nach Fig. 6 bereits so weit eingeschwenkt, daß er mit seinem abgerundeten, dem Dichtungssteg 6 zugewandten Endbereich am Überzug 13 des Dichtsteges 6 gerade zur Anlage kommt.

Die Fig. 7, 8 und 9 zeigen dann weitere Zwischenstellungen beim zunehmenden Heranwandern des Flügels 26 gegen den Rahmen 24, wobei die Endstellung bei geschlossenem Fenster oder geschlossener Türe in Fig. 10 gezeigt ist.

Wie aus den Fig. 6 bis 10 ersehen werden kann, wird der Anstellwinkel ε, der (im Hohlquerschnitt 30) zwischen der dort liegenden Innenseite (Unterseite) des Stützsteges 6 und der Innenseite des Verbindungssteges 9 vorliegt, infolge der beim Schließen zunehmenden Verdrückung des Kopfbereiches 2 und des damit verbundenen Verschwenkens des Stützsteges 6 zum Profilrücken 4 hin laufend verkleinert, bis er in der geschlossenen Endstellung (Fig. 10) seinen kleinsten Wert erreicht hat.

Während des Einrückens des Kopfbereiches 2 durch den Flügel 26 schwenkt dieser, wie aus den Fig. 6 bis 10 erkennbar, im wesentlichen in Richtung des Pfeiles A (Fig. 6), also nahezu parallel zur Richtung des Profilrückens 4 nach unten (stumpf eindrehender Flügel). Dabei wird, wie in Fig. 7 dargestellt, in der Berührungsfläche zwischen dem Flügel 26 und dem Überzug 13 eine Reibkraft ***F*** , die am Überzug 13 in Richtung des Pfeiles F in Fig. 7 wirkt, erzeugt und wirkt in Richtung einer Verschiebung des Dichtsteges 6 nach unten. Diese Reibungskraft ***F*** ist auch der Grund für das bei vielen Dichtungsprofilen auftretende Überkrempeln des Kopfbereiches, bei dem nämlich tatsächlich ein Herabwandern des Dichtsteges 6 nach unten, damit auch ein Verbiegen des Verbindungssteges 9 nach unten hin, auftritt und insgesamt eine unerwünschte Verquetschung des Kopfbereiches 2 mit einer Art "*Rollbewegung"* nach unten eintritt.

Die Fig. 6 bis 10 zeigen, daß bei der eingesetzten Strangdichtung ein solcher unerwünschter Effekt des Herabwanderns des Dichtsteges 6 nach unten nicht eintritt, was insbesondere durch die starke Abstützwirkung des Stützsteges 7, der über einen längeren Abschnitt auf der Unterseite des Dichtsteges 6 diesen nach oben hin abstützt, verhindert wird. Auch die Materialanhäufung im Bereich des linken oberen Eckes der Strangdichtung 1, zwischen dem Scheitelpunkt S der Einbuchtung 10 am Quersteg 9 und dessen Einmündung in den Profilrücken 4, wird eine starke abstützende Wirkung am Verbindungssteg 9 gegen ein unerwünschtes Verkippen desselben nach unten erreicht.

Insgesamt wirkt also die Anordnung zwischen Stützsteg 9 und Dichtsteg 6 in der gewählten Form sowie die Materialverdickung im linken oberen Eckbereich des Gesamtquerschnitts der Strangdichtung 1, wie angeführt, wirkungsvoll gegen das Auftreten eines unerwünschten Überkrempelns des Kopfbereiches, wodurch die guten Dichteigenschaften des eingesetzten Profiles voll zur Geltung kommen können.

Im Dicht-Endzustand (Fig. 10) ist schließlich die Außenseite des Dichtsteges 6 in eine ungefähr zum Profilrücken 4 parallele Lage gebracht und liegt fast über ihre ganze Länge an der Außenfläche 27 des Flügels 26 an, dichtet somit über eine relativ große Dichtfläche hinweg und wird durch den nach innen elastisch eingedrückten Stützsteg 7 und dessen Einmündung in den Dichtsteg 6 in wirkungsvoller Weise gegenüber dem Flügel 26 abgestützt, so daß auch eine relativ große Andrückkraft in der Kontaktfläche zwischen Flügel 26 und der Außenseite des Dichtsteges 6 vorliegt.

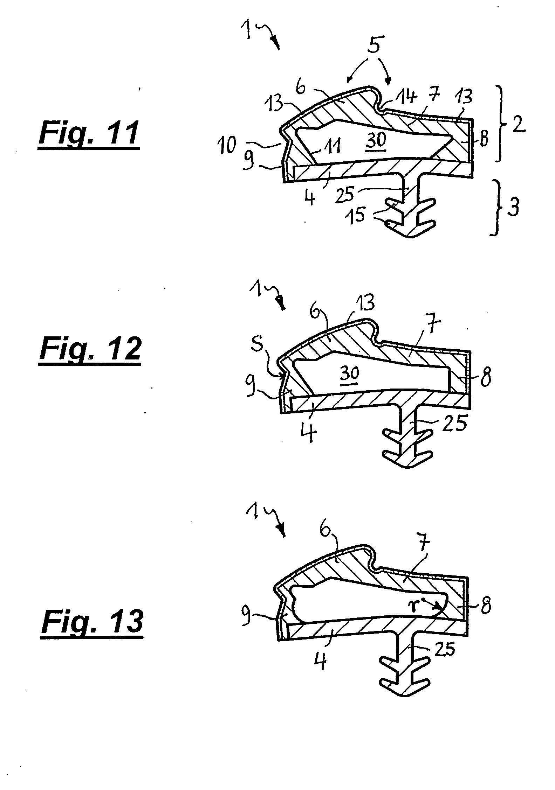

In den Fig. 11, 12 und 13 sind schließlich Querschnitte dreier weiterer alternativer Ausführungsformen einer Strangdichtung 1 gezeigt, die sich von denen aus den Fig. 1 bis 5 im wesentlichen dadurch unterscheiden, daß sie für eine andere Einbauart bestimmt sind, indem dort nämlich der Fußbereich 3 vom Profilrücken 4 auf dessen dem Kopfbereich 2 abgelegener Rückseite nahezu senkrecht vorspringt.

Bei dem nicht-eingebauten, entspannten Zustand der Strangdichtung 1, wie er in den Fig. 11 bis 13 gezeigt ist, stehen die von beiden Seiten des vorstehenden Dichtungsfußes 25 ablaufenden Abschnitte des Profilrückens 4 unter einem sehr stumpfen Winkel zueinander, der sich aber nur wenig von dem Zustand unterscheidet, bei dem sie (im eingebauten Zustand) in einer gemeinsamen geraden Ausrichtung stehen. Diese geringfügige Anstellung der beiden Teile zueinander (also jeweils unter einem etwas geringeren Winkel als 90° relativ zum vorstehenden Dichtungsfuß 25) dient dazu, beim Einbau der Dichtung durch elastisches Ausrichten der beiden abgewinkelten Abschnitte zueinander in einer geraden Ausrichtung einen guten Anpreßsitz gegen die entsprechende Anlagefläche zu gewährleisten, was durch ein Eindrücken des Dichtungsfußes 25 in eine Aufnahmenut herbeigeführt werden kann.

Der Außenschenkel 5 liegt bei den Ausführungsformen der Fig. 11 bis 13 auf der Oberseite des Hohlprofiles 30. Bei den Ausführungsformen der Fig. 11 bis 13 ist zudem der ganze oberhalb des Profilrückens 4 angeordnete Abschnitt des Kopfbereiches 2, also der Außensteg 5 (bestehend aus dem Dichtsteg 6 und dem Stützsteg 7), der Quersteg 8 und der Verbindungssteg 9, auf der gesamten dem Hohlquerschnitt 30 abgewandten Außenfläche mit einer verschleißmindernden und reibgünstigen Überzugsschicht 13 versehen. Die Ausführungsformen der Fig. 11, 12 und 13 unterscheiden sich voneinander nur durch die Ausgestaltung der im Hohlquerschnitt 30 innenliegenden Seite des Quersteges 8 und der Gestaltung der Innenfläche 11 des Verbindungsstegs 9 im Bereich zwischen dem Scheitelpunkt **S** und der Einmündung des Verbindungssteges 9 in den Profilrücken 4, wobei der Verbindungssteg 9 in den drei gezeigten Ausführungsformen sogar den Profilrücken 4 an dessen (in den Figuren: linken) Endseite kappenförmig überdeckt.

Als elastisches Material für die verschiedenen Abschnitte der Strangdichtung 1 können alle hierfür geeigneten elastischen Materialien, insbesondere Elastomere, eingesetzt werden, wobei, falls unterschiedliche Materialien eingesetzt werden, insbesondere für den Dichtrücken stets ein härteres Material verwendet wird, während auf der Dichtungsseite meist ein weicherer, geschäumter Werkstoff eingesetzt wird.

Für das Material von verschleißfesten Überzügen wird oftmals ein elastisches Material größerer Härte als das des darunterliegenden Dichtungssteges benutzt. Für manche Einsatzfälle ist es jedoch auch vorteilhaft, hier ebenfalls ein weicheres, insbesondere ein geschäumtes, Material zu verwenden. Allerdings sei bemerkt, daß auch härtere Materialien in geschäumter Form aufgebracht werden können, so daß entsprechend dem jeweiligen Einsatzfall die Wahl, ob alle Abschnitte der Strangdichtung 1 oder nur einige davon geschäumt ausgeführt werden sollen, entschieden werden kann.

## Patentansprüche

1. Elastische Strangdichtung (1) für Fenster, Türen oder dgl. mit einem als Hohlquerschnitt (30) ausgebildeten Kopfbereich (2) und einem Fußbereich (3), der mit mindestens einer Halterippe (15) zur Verankerung in einer Haltenut (23) eines Flügelfalzes (24) eines Fensters, einer Türe oder dgl. versehen ist, wobei Kopfbereich (2) und Fußbereich (3) über einen Profilrücken (4) miteinander verbunden sind, und wobei der Kopfbereich (2) auf seiner dem Profilrücken (4) gegenüberliegenden Seite einen Außensteg (5) aufweist, der aus einem Dichtsteg (6) und einem in diesen einmündenden Stützsteg (7) besteht, wobei, von der Innenseite des Hohlquerschnitts (30) aus gesehen, Dichtsteg (6) und Stützsteg (7) unter einem stumpfen Winkel zueinander angestellt sind, ferner der Dichtsteg (6) an seinem vom Stützsteg (7) abgewandten Ende mit dem einen Ende des Profilrückens (4) über einen Verbindungssteg (9) verbunden ist, der auf seiner dem Hohlquerschnitt (30) abgewandten Außenseite eine V-förmige Einbuchtung (10) hat, deren Seiten unter einem stumpfen Winkel (α) zueinander geneigt sind, und wobei der Stützsteg (7) an seinem dem Dichtsteg (6) abgewandten Ende in einen Quersteg (8) mündet, der im wesentlichen senkrecht zum Profilrücken (4) verläuft,
**dadurch gekennzeichnet,**
**daß** der Verbindungssteg (9) auf seiner dem Hohlquerschnitt (30) zugewandten Innenseite - im Querschnitt der Dichtung gesehen -so ausgebildet ist, daß der Bereich des Quersteges (8), der vom Scheitel (S) der V-förmigen Einbuchtung (10) aus zum Profilrücken (4) hin verläuft, mit wachsendem Abstand vom Scheitel (S) bis zur Einmündung in den Profilrücken (4) zunehmend dicker (d) wird, und daß der Stützsteg (7) zwischen dem Quersteg (8) und dem Dichtsteg (5) als ein im wesentlichen geradlinig verlaufender Steg ohne eine an ihm dazwischen angebrachte Gelenkstelle ausgebildet ist, der auf seiner dem Hohlquerschnitt (30) zugewandten Innenseite vom Quersteg (8) unter einem Winkel (γ) abläuft, dessen Größe im entspannten Zustand der Dichtung in einem Bereich von 80° bis 100° liegt, und auf der Unterseite des Dichtsteges (6) in diesen - vom Hohlquerschnitt (30) aus gesehen - über einen Bereich (B) der Länge des Dichtstegs (6) hinweg einmündet, der mindestens 40% der Gesamtlänge (L) des Dichtsteges (6) beträgt.

2. Elastische Strangdichtung nach Anspruch 1, **dadurch gekennzeichnet, daß** der Dichtsteg (6) auf seiner dem Hohlquerschnitt (30) abgewandten Außenseite mit einer Verschleißauflage (13) versehen ist.

3. Elastische Strangdichtung nach Anspruch 2, **dadurch gekennzeichnet, daß** die Verschleißauflage (13) günstigere Reibeigenschaften als das Material des Dichtsteges (6) hat.

4. Elastische Strangdichtung nach einem der Ansprüche 1 bis 3, **dadurch gekennzeichnet, daß** der Fußbereich (3) der Dichtung auf der dem Hohlquerschnitt (30) abgewandten Seite des Profilrückens (4) von diesem unter einem Winkel von etwa 90° vorspringt.

5. Elastische Strangdichtung nach Anspruch 4, **dadurch gekennzeichnet, daß** der Kopfbereich (2) auf seiner dem Hohlquerschnitt (30) abgewandten Außenseite, soweit diese nicht durch den Profilrücken (4) gebildet wird, vollständig mit einer Überzugsschicht (13) aus einem gegenüber dem Material der Strangdichtung (1) härteren elastischen Material versehen ist.

6. Elastische Strangdichtung nach einem der Ansprüche 1 bis 5, **dadurch gekennzeichnet, daß** der Dichtsteg (6) auf seiner Außenseite eine (im Querschnitt gesehen) nach außen hin gewölbte Formgebung aufweist.

7. Elastische Strangdichtung nach einem der Ansprüche 1 bis 6, **dadurch gekennzeichnet, daß** der Bereich (B) der Länge des Dichtsteges (6), über den hinweg der Stützsteg (7) in diesen einläuft, ungefähr der halben Länge des Dichtsteges (6) entspricht.

8. Elastische Strangdichtung nach einem der Ansprüche 1 bis 7, **dadurch gekennzeichnet, daß** der Stützsteg (7) über seine ganze Länge bis zur Einmündestelle in die Unterseite des Dichtsteges (6) eine etwa gleich große Dicke aufweist.

9. Elastische Strangdichtung nach einem der Ansprüche 1 bis 8, **dadurch gekennzeichnet, daß** Kopfbereich (2) und Fußbereich (3) der Dichtung (1) gemeinsam auf einer Seite des Profilrückens (4) angeordnet sind.

10. Elastische Strangdichtung nach Anspruch 9, **dadurch gekennzeichnet, daß** in dem Eckbereich, in dem der Verbindungssteg (9) in das zugeordnete Ende des Profilrückens (4) einläuft, am Ende des Profilrückens (4) eine Dehnsperre (21) an diesem ausgebildet ist.

11. Elastische Strangdichtung nach einem der Ansprüche 1 bis 10, **dadurch gekennzeichnet, daß** der Quersteg (9) in dem Bereich, der zwischen der Einmündestelle des Stützstegs (7) und dem Profilrücken (4) verläuft, eine zum Profilrücken (4) hin zunehmende Dicke (d') aufweist.

12. Elastische Strangdichtung nach Anspruch 11, **dadurch gekennzeichnet, daß** die dem Fußbereich (3) der Dichtung (1) zugewandte Außenseite des Quersteges (9) - im Querschnitt - im wesentlichen geradlinig verläuft und unter etwa 90° in den Profilrücken (4) einläuft, während die dem Hohlquerschnitt (30) zugewandte Innenseite des Querstegs (9) von der Einmündestelle des Stützstegs (7) in den Quersteg (9) aus schräg zum Profilrücken (4) hin unter einem (von der Innenseite des Hohlquerschnitts 20 aus gesehen) stumpfen Winkel (β) zu letzterem verläuft.

13. Elastische Strangdichtung nach einem der Ansprüche 1 bis 12, **dadurch gekennzeichnet, daß** der Dichtsteg (6) an der Außenseite seines dem Stützsteg (7) zugewandten Endes im Querschnitt (16) abgerundet ist und unter Ausbildung einer Einkerbung (14) in die Außenseite des Stützstegs (7) einläuft.

14. Elastische Strangdichtung nach Anspruch 13, **dadurch gekennzeichnet, daß** die Einkerbung (14) im Querschnitt kreisförmig ausgebildet ist.

15. Elastische Strangdichtung nach einem der Ansprüche 1 bis 14, **dadurch gekennzeichnet, daß** der Quersteg (9) in zwei unter einem stumpfen Winkel (ϑ) auseinanderlaufende Schrägstege (18, 19) einmündet, die sein Ende mit dem Profilrücken (4) verbinden, wobei einer der Schrägstege (19) zu dem Endbereich des Profilrückens (4) hin verläuft, an dem der Dichtungsfuß ausgebildet wird, während der andere Schrägsteg (18) in den Profilrücken (4) in einem Abstand zur Einmündestelle des Verbindungssteges (9) in diesen einläuft.
